# EUROPEAN PATENT SPECIFICATION

(11) **EP 4 269 718 B1**
(45) Date of publication and mention of the grant of the patent: **29.10.2025**
(21) Application number: 23169369.8
(22) Date of filing: 24.04.2023
(51) Int. Cl.: E04F 17/02, F16L 9/00, F16L 9/22, F16L 59/14, F16L 59/18

(54) **A TUBULAR SMOKE SHAFT SECTION, A SMOKE SHAFT AND A FABRICATING METHOD**
ROHRFÖRMIGER RAUCHSCHACHTABSCHNITT, RAUCHSCHACHT UND HERSTELLUNGSVERFAHREN
SECTION TUBULAIRE DE CONDUIT DE FUMÉE, CONDUIT DE FUMÉE ET PROCÉDÉ DE FABRICATION

(30) Priority: 25.04.2022 FI 20225344
(43) Date of publication of application: 01.11.2023
(73) Proprietor: Kera Group Oy, 16300 Orimattila (FI)
(72) Inventor: Tukiainen, Jouni, 16300 Orimattila (FI)
(74) Representative: LEITZINGER OY

(56) References cited:
- EP-A1- 3 282 164
- WO-A1-93/22593
- FR-A1- 2 409 855

## Description

### Field of the invention

The invention relates to a smoke shaft, and in particular to a tubular smoke shaft section, a smoke shaft, and a method of fabricating a tubular smoke shaft section.

### Background of the invention

Smoke shafts (also referred to as smoke ducts) are used in buildings for removing smoke, heat and combustion products from one or more fire compartments of the building, such as floors of the building, to the outside of the building. Smoke shafts can also be used to take replacement air into the building. Smoke, heat and combustion products may be produced in case of fire, for example, and become hazardous for the people inside the building. If smoke, heat and combustion products are not removed by smoke shafts, these might be guided to a stairway and disable it from serving as an escape route. The same smoke shaft may serve a single fire compartment or plurality of different fire compartments. In multi-storey buildings, the smoke shafts may, for example, provide a duct from lower parts of the building through intermediate floors and further up through the roof possibly having openings leading to different floors for thus being able to remove smoke, heat and combustion products from different floors. The upper end of the smoke shaft has an opening, which may be covered with a hatch. The hatch may comprise a window e.g. so that the smoke shaft can provide light into the building. This is advantageous particularly if the smoke shaft lower end opens into a room right below the roof.

In prior art, one way to fabricate and install a smoke shaft has been to build it from tubular sections by piling them on top of each other. Such tubular sections are known which have sandwich walls having insulation layer between face sheets. It has been noticed that sometimes when the temperature rises very high in case of fire, the thermal insulation ability of the smoke shaft built from this kind of sections is slightly reduced.

A related prior art solution has been disclosed for instance in document EP 3282164A1. This document shows a pipe system including round tubular sections with fire protection mass inside their wall spaces, and an expandable sealing mass dispensed between consecutive sections. The pipe system comprises a round collar clamping consecutive sections to each other. Related prior art solutions have also been disclosed in documents FR 2409855A1 and WO 9322593A1.

### Brief description of the invention

The object of the invention is to introduce a new solution for a smoke shaft, which is improved in terms of heat insulation properties. An object is also to provide a simple and efficient way to fabricate a smoke shaft section, which has improved heat insulation properties.

An object is particularly to introduce a solution by which one or more of the above-mentioned problems of prior art and/or drawbacks discussed or implied elsewhere in the description can be solved.

It is introduced, inter alia, embodiments where heat insulation ability of the smoke shaft/smoke shaft section is good in different temperatures, and particularly also in very high temperatures.

It is brought forward a new tubular smoke shaft section comprising, in particular when in an upright position, plurality of vertical walls in connection with each other and arranged to border a hollow upwards and downwards open smoke guiding channel, wherein each said wall has a sandwich structure and comprises a first face sheet forming an inner face of the wall and a second face sheet forming an outer face of the wall, and an insulation layer between said first face sheet and said second face sheet, wherein one or more of said walls comprises on one or more side faces of the insulation layer a sealing member for sealing a gap between said side face of the insulation layer and a side face of another wall, wherein the sealing member comprises intumescent material.

The tubular smoke shaft section is such that it has four of said walls which are at right angle relative to each other such that the tubular smoke shaft section is a rectangular tube.

The insulation layer is a mineral wool layer, in particular which comprises or is made of mineral wool. Said sealing member is an elongated flexible band. Said sealing member is attached directly to the side face of the insulation layer by glue.

Said one or more side faces of the insulation layer on which a sealing member is provided comprises an upper or lower side face of the insulation layer, said another wall being a wall of another tubular smoke shaft section which another wall is above or below the wall comprising the side face in question.

With this kind of solution one or more of the above-mentioned objects can be facilitated.

An advantage is particularly that the intumescent sealing member is able to expand as a result of substantial rise of temperature in case of fire so that it compresses against the insulation layer and fills any existing and/or emerging spaces inside or around the insulation material layer. Thus, it can for example compensate any dimensional changes or eliminate voids inside or around the material layer. It has been noticed that dimensional changes, in particular shrinkage, can occur in the insulation layer when heat rises strongly. With insulation layer when made of material sensitive to dimensional changes, even slight, the solution is very advantageous. By the intumescent sealing member it is ensured that the gap between said side face of the insulation layer and a side face of another wall is tight in high temperature situations.

Preferable further details of the tubular smoke shaft section are introduced in the following, which further details can be combined with the tubular smoke shaft section individually or in any combination.

In a preferred embodiment, said first face sheet and/or said second face sheet is a metal sheet, in particular a sheet which comprises or is made of metal.

In a preferred embodiment, said first face sheet and/or said second face sheet is rectangular or at least substantially rectangular in shape.

In a preferred embodiment, said sealing member is attached directly to the side face of the insulation layer, preferably by glue. Said sealing member is thus particularly preferably attached directly against mineral wool. In the preferred embodiment, said sealing member is in particular attached directly to the side face of the insulation layer in solid form, preferably by glue.

In a preferred embodiment, the sealing band has thickness, width and length, the width/thickness ratio being more than 2, more preferably more than 5. This kind of wide band provides effect on a relatively large area without forming a very thick layer and hereby it facilitates sealed connection yet without taking much space or otherwise disturbing heat insulation effect of the heat insulation layer which is intended to serve as the main component for this purpose. The thickness is preferably 3 mm - 50 mm, most preferably3 mm - 15 mm. The width is preferably 30-200 mm.

In a preferred embodiment, the sealing band has thickness, width and length, wherein the thickness and/or width the sealing band is/are constant throughout the length of the sealing band. This facilitates that the sealing in the gap is constant throughout the length of the band.

In a preferred embodiment, said intumescent material is or comprises exfoliated graphite or hydrated sodium silicate.

In a preferred embodiment, said sealing member covers more than half, preferably more than 80 %, most preferably completely the length of the side face on which it is provided.

In a preferred embodiment, the sealing member is elongated and oriented to extend in direction orthogonal to normal of the face sheets.

In a preferred embodiment, each side face of the insulation layer on which a sealing member is provided is not covered by a rigid members of the wall in question such as neither of the face sheets.

In a preferred embodiment, the face sheets are not in contact with each other nor connected by a metal member. This is advantageous, because otherwise a heat bridge would be formed between the face sheets.

In a preferred embodiment, each said aforementioned gap is preferably horizontally or vertically oriented.

In a preferred embodiment, said one or more side faces of the insulation layer on which a sealing member is provided extend(s) in direction orthogonal to normal of the face sheets of the wall in question.

In a preferred embodiment, said upper or lower side face side face extends in horizontal direction.

In a preferred embodiment, said sealing member provided on the upper or lower side face side face is elongated in horizontal direction.

In a preferred embodiment, said one or more side faces of the insulation layer on which a sealing member is provided comprises a side face of the insulation layer, in particular a flank face, which extends in vertical direction, said another wall being in particular an adjacent wall of the same tubular smoke shaft section.

In a preferred embodiment, said sealing member provided on a flank face is elongated in vertical direction.

In a preferred embodiment, a sealing member is between one or more mitre joints of the smoke shaft section, wherein the mitre joint is formed between insulation layers of adjacent walls. The sealing member particularly extends between opposing vertical faces of the insulation layers of adjacent walls in contact with them.

In a preferred embodiment, each flank face of insulation layer of a wall on which a sealing member is provided is inclined, most preferably at an angle 45 deg as illustrated, relative to the plane of the first and second face sheet of the wall in question, in particular as viewed in vertical direction.

In a preferred embodiment, the upper end of the wall is provided with a first form locking shape and the lower end of the wall with a second form locking shape the first and second being counterparts for each other. Preferably, the first form locking shape comprising a male form locking shape and the second form locking shape a female form locking shape forming a counterpart for the male form locking member, or vice versa.

In a preferred embodiment, the lower edge of the first sheet has been bent to form a downwardly open groove, particularly the first sheet being bent inwards, upwards, inwards and downwards (inwards meaning towards the wall center plane), and the upper edge of the first sheet is arranged to fit into the groove, preferably bent inwards, upwards inwards and downwards.

In a preferred embodiment, the lower edge of the second sheet has been bent to form a downwardly open groove, particularly the second sheet being bent inwards, upwards, inwards and downwards (inwards meaning towards the wall center plane), and the upper edge of the second sheet is arranged to fit into the groove, preferably bent inwards, upwards inwards and downwards.

In a preferred embodiment, the second face sheets of all the walls are of same one-piece structure.

It is also brought forward a new smoke shaft wherein the smoke shaft comprises plurality of tubular smoke shaft sections as defined in any of the preceding claims, piled on top of each other in alignment such that their smoke guiding channels together form a continuous vertically oriented smoke guiding channel.

With this kind of solution one or more of the above-mentioned objects can be facilitated.

Preferable further details of the smoke shaft have been introduced above as well as will be introduced in the following, which further details can be combined with the smoke shaft individually or in any combination.

In a preferred embodiment, one or more of the smoke shaft sections, except at least the lowermost, rests at least partially carried by the smoke shaft section below it.

In a preferred embodiment, the smoke shaft preferably comprises at least a first smoke shaft section and second smoke shaft section on top of the first smoke shaft section such that the upper faces of the insulation layers of the walls of the first section and the lower faces of the insulation layers of the walls of the second section are opposite each other and have a sealing member vertically between them, wherein the sealing member comprises intumescent material.

In a preferred embodiment, the smoke shaft extends through one or more openings formed in a floor structure and/or through one or more openings formed in a roof structure of a building.

In a preferred embodiment, the upper end thereof is at least partially outside of the building wherein the smoke shaft is installed.

In a preferred embodiment, the upper end thereof is provided with an openable hatch covering in an openable manner the smoke guiding channel.

In a preferred embodiment, consecutive smoke shaft sections piled on top of each other are locked vertically immovably together by aid of an elongated fixing member, such as bolt or screw or rivet extending through the lower edge of the second sheet of a first smoke shaft section 1 and the upper edge of the second sheet of a second smoke shaft section located below said first smoke shaft section.

In a preferred embodiment, the sealing member is arranged to expand as a result of substantial rise of temperature, such as in case of fire, so that it compresses against the insulation layer and fills existing and/or emerging spaces inside or around the insulation material layer.

It is also brought forward a new method of fabricating a tubular smoke shaft section, which tubular smoke shaft section is as defined anywhere above or in any the preceding claims, comprising
providing a sandwich element having a width and length and thickness, which comprises first element face sheet and a second element face sheet and an insulation layer between said face sheets; and
cutting three grooves in the first element face sheet and in the element insulation layer, which grooves are elongated and oriented in width direction of the sandwich element and spaced apart in length direction of the sandwich element, the grooves not extending in the second face sheet, thereby forming side faces; and
bending the sandwich element into tubular shape comprising bending towards each other the portions of the sandwich element which portions are at the opposite sides of the grooves.

The method moreover comprises placing one or more sealing members on one or more side faces of the insulation layer of one or more of said portions. The sealing member comprises intumescent material. Said side faces of one or more of said portions include one or more faces facing in longitudinal direction of the grooves.

Said sealing member is an elongated flexible band. Said placing comprises attaching the one or more sealing members on one or more side faces of the insulation layer of one or more of said portions. This attaching is performed directly to the side face of the insulation layer by glue.

With this kind of solution one or more of the above-mentioned objects can be facilitated.

Preferable further details of the method, such as structural details thereof, have been introduced above. Preferable further details of the method will also be introduced in the following, which further details can be combined with the method individually or in any combination.

In a preferred embodiment, said side faces of one or more of said portions preferably also include one or more side faces formed by said cutting.

In a preferred embodiment, the grooves are V-shaped.

In a preferred embodiment, in said attaching each said sealing member is in particular attached directly to the side face of the insulation layer in solid form, preferably by glue.

In a preferred embodiment, said sealing member is an elongated member, preferably a flexible band, and the elongated flexible band has a thickness, width and length, the width/thickness ratio being more than 2 more preferably more than 5.

It is also brought forward a new smoke shaft arrangement comprising a smoke shaft as defined anywhere above or in any of the claims of the application.

### Brief description of the drawings

In the following, the present invention will be described in more detail by way of example and with reference to the attached drawings, in which
FIG. 1 illustrates an embodiment of a tubular smoke shaft section according to an embodiment.
FIG. 2 illustrates the cross section A-A of the upper end of a wall of a tubular smoke shaft section of Figure 1.
FIG. 3 illustrates partially an embodiment of a smoke shaft comprising smoke shaft sections of Figure 1 piled on top of each other.
FIG. 4 illustrates the cross section C-C of the smoke shaft of Figure 3.
FIG. 5 illustrates the cross section B-B a wall of a tubular smoke shaft section of Figure 1.
FIG. 6 illustrates an enlarged view of a part of Figure 5.
Figs 7-11 illustrate an embodiment of a fabrication method of a smoke shaft section, as well as preferred details of the structure of a tubular smoke shaft section of Figures 1-6.
FIG. 12 illustrates preferred further details of the smoke shaft of Figure 3 and an arrangement comprising the smoke shaft.

### Detailed description

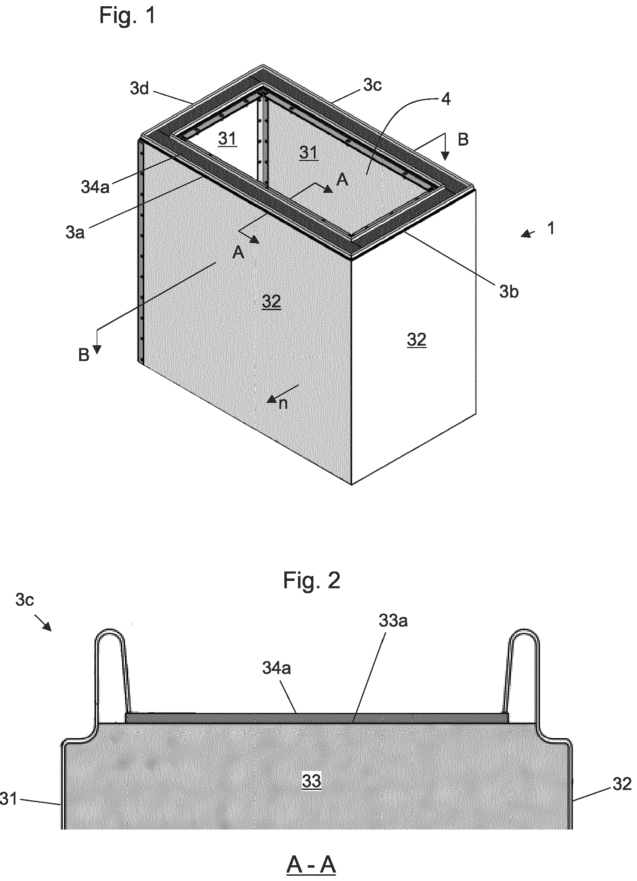

Figure 1 illustrates an embodiment of a tubular smoke shaft section 1. The tubular smoke shaft section 1 is illustrated and described hereinafter as it is when in upright position. The tubular smoke shaft section 1 comprises plurality of walls 3a,3b,3c,3d, in particular four walls 3a,3b,3c,3d. The walls 3a,3b,3c,3d are vertical when the tubular smoke shaft section 1 is in an upright position. The walls 3a,3b,3c,3d are in connection with each other and arranged to border a hollow, upwards and downwards open, smoke guiding channel 4. Each said wall 3a,3b,3c,3d has a sandwich structure and comprises a first face sheet 31 forming an inner face of the wall 3a,3b,3c,3d and a second face sheet 32 forming an outer face of the wall 3a,3b,3c,3d, and an insulation layer 33 between said first face sheet 31 and said second face sheet 32. Each said face sheet 31,32 is preferably rectangular or at least substantially rectangular in shape.

Each of said walls 3a,3b,3c,3d comprises on a side face 33a and side face 33b of the insulation layer 33 a sealing member 34a,34b for sealing a gap g1;g2 between said side face 33a,33b of the insulation layer 33 and a side face 33a',33b of another wall 3a,3b,3c,3d. The sealing member 34a,34b comprises intumescent material. Thus, the sealing member 34a,34b is intumescent. The intumescent sealing member 34a,34b is able to expand as a result of substantial rise of temperature in case of fire so that it compresses against the insulation layer 33 and fills any existing and/or emerging spaces inside or around the insulation material layer 33. Thus, it can for example compensate any dimensional changes or eliminate voids inside or around the material layer 33. Dimensional changes, in particular shrinkage, can occur in the insulation layer 33 when heat rises strongly. This is noticed to be the case for example with mineral wool. So, with insulation layer 33 when made of material sensitive to dimensional changes, even slight, the solution is very advantageous. It has been noticed that when the insulation layer 33 is a mineral wool layer, leakages due to dimensional changes are relatively likely to occur in high temperatures and these can be eliminated effectively with the described sealing member 34a,34b, because expansion thereof is able to compensate for the shrinkage of the heat insulation layer 33. By the intumescent sealing member 34a,34b it is ensured that the gap g1,g2 between said side face 33a,33b of the insulation layer 33 and a side face 33a',33b of another wall 3a,3b,3c,3d is tight in high temperature situations.

In the preferred embodiments illustrated and described referring to Figures 1-6, a sealing member 34a has been on provided on vertical and horizontal side faces 33a,33b of the insulation layer 33 of each wall 3a-3d. A horizontal sealing member 34a facilitates tightness and heat isolation of connection between walls of different smoke shaft sections 1 on top of each other. A vertical sealing member 34b on the other hand facilitates tightness and heat isolation of connection between adjacent walls of the same smoke shaft section 1. Simultaneous presence of both vertical and horizontal sealing members 34a,34b provides a smoke shaft solution which has overall its structure good tightness and heat isolation without heat leaks or leaks of gaseous substances even in high temperatures.

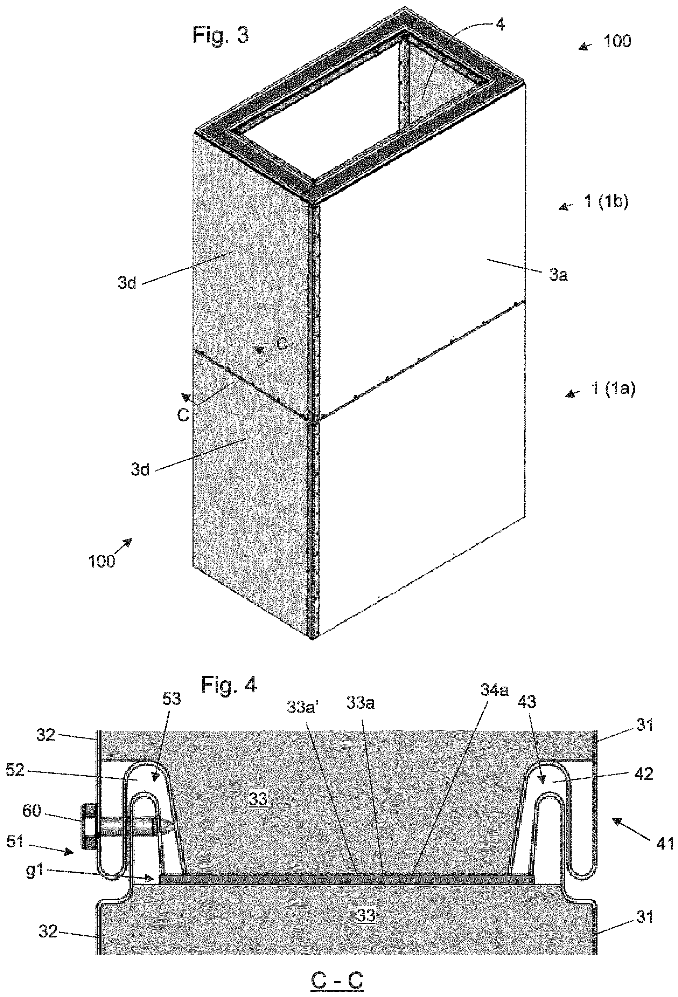

A cross section A-A of the upper end of a wall 3a,3b,3c,3d has been illustrated in Figure 2. As visible in Figure 2, said side face 33a of the insulation layer 33 on which a sealing member 34a is provided extends in direction orthogonal to normal n of the face sheets 31,32 of the wall in question, and particularly in horizontal direction. Such a side face, when having an intumescent sealing member 34a, is well sealed in case of fire when the smoke shaft section forms a part of a smoke shaft 100 where smoke shaft sections have been piled on top of each other as illustrated in Figures 3 and 4. The sealing ability is well maintained also in high temperature if there are any existing and/or emerging spaces inside or around the insulation layer 33. Thus, it can for example compensate any dimensional changes or eliminate voids inside or around the material layer 33. These Figures illustrate a smoke shaft 100 only partially. In this embodiment, said side face 33a on which a sealing 34a member is provided is an upper side face of the insulation layer 33. However, it could alternatively be a lower side face of the insulation layer 33. As illustrated in Figure 4, said another wall mentioned above is in this case a wall 3d of another tubular smoke shaft section 1b which another wall is above the wall 3d comprising the side face 33a in question.

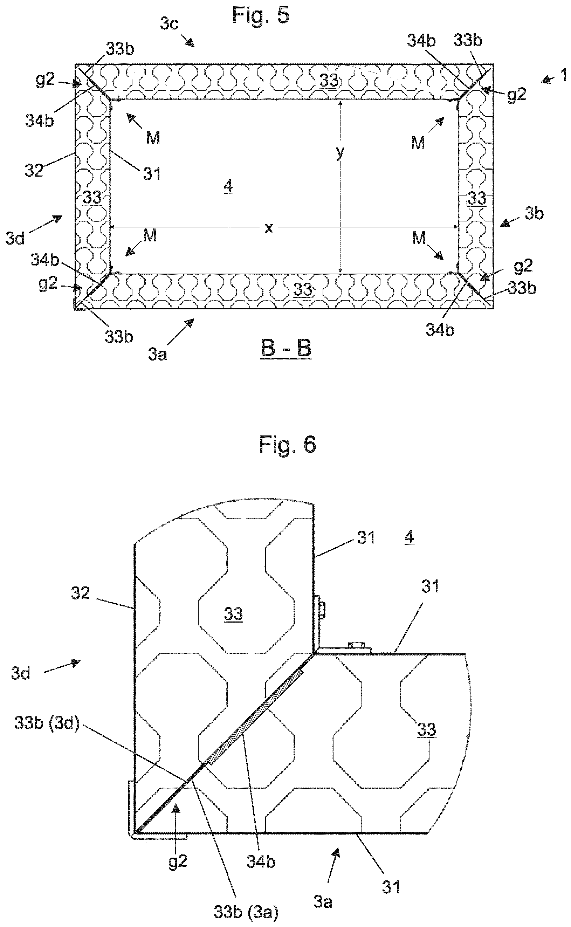

A cross section B-B of the smoke shaft section 1, showing cross section of each wall 3a,3b,3c,3d has been illustrated in Figure 5. As visible in Figure 5, said side face 33b of the insulation layer 33 on which a sealing member 34b is provided extends in direction orthogonal to normal n of the face sheets 31,32 of the wall in question, and particularly in vertical direction. The vertically extending side face of the insulation layer 33 is also referred to in the application by term "flank face" of the insulation layer 33. A vertically extending side face 33b of a of the insulation layer 33, when having an intumescent sealing member 34b, is well sealed in case of fire against a side face of another wall. The sealing ability is well maintained also in high temperature if there are any existing and/or emerging spaces inside or around the insulation layer 33. Thus, it can for example compensate any dimensional changes or eliminate voids inside or around the material layer 33. As illustrated in Figures 5 and 6, said another wall mentioned above is in this case an adjacent wall of the same tubular section 1.

As visible in Figures 5 and 6, each flank face 33b of insulation layer 33 of a wall, wall 3d in Figure 6, on which a sealing member 34b is provided is inclined, most preferably at an angle 45 deg as illustrated, relative to the plane of the first and second face sheet 31,32 of the wall in question, in particular as viewed in vertical direction. The flank face 33b of insulation layer 33 of the adjacent wall, wall 3a in Figure 6, which flank face is opposite the flank face on which a sealing 34b member is provided, is also inclined, most preferably at an angle 45 deg as illustrated, relative to the plane of the first and second face sheet 31,32 of the wall in question. The sealing member 34b is thus between a mitre joint formed between insulation layers 33 of adjacent walls, i.e. walls 3d and 3a in Figure 6. The sealing member 34b extends between opposing vertical faces of the insulation layers 33 of adjacent walls in contact with them.

Each said wall 3a,3b,3c,3d having a sandwich structure is preferably such that the insulation layer 33 is a mineral wool layer, in particular which comprises or is made of mineral wool. Said first face sheet 31 and/or said second face sheet 32 is a metal sheet, in particular a sheet which comprises or is made of metal. Each said wall 3a,3b,3c,3d having a sandwich structure is preferably such the face sheets thereof are parallel to each other. Each said wall 3a,3b,3c,3d is preferably moreover such that the face sheets 31,32 are not in contact with each other. Preferably, the face sheets 31,32 are not connected by a metal member. This is advantageous, because otherwise a heat bridge would be formed between the face sheets

Each 33a,33b of the insulation layer 33 on which a sealing member 34a,34b is provided is not covered by a rigid members comprised in the wall in question such as neither of the face sheets 31,32. Thus, expansion of the sealing member 34a,34b is able to compress it against the insulation layer 33 such that it fills voids or spaces existing or emerging inside or around the insulation layer 33, e.g. voids or spaces existing or emerging inside or around the insulation layer 33 due to shrinkage of the insulation layer 33 in high temperature.

Each said sealing member 34a,34b is preferably attached directly against the side face 33a,33b of the insulation layer 33, preferably by glue. Thus, it is preferably attached directly against mineral wool. Being thus positioned right next to the insulation layer 33 provides that it can expand and fill any existing or emerging spaces and voids in or around the insulation layer 33 effectively when heat rises strongly in case of fire. In the preferred embodiment, each said sealing member 34a,34b is in particular attached directly to the side face 33a,33b of the insulation layer 33 in solid form. Thereby, the shape thereof is controlled and a sufficient coverage thereof ensured.

Generally, said intumescent material can be any suitable intumescent material. It can be or comprise exfoliated graphite or hydrated sodium silicate, for example, but also other alternatives are known. Intumescent material bands are commercially available, such as by trademark Kerafix Flexpress.

In the preferred embodiments, said sealing member 34a,34b is an elongated member, preferably a flexible band. Preferably, as illustrated, the sealing band has thickness, width and length, the width/thickness ratio being more than 2, more preferably more than 5. This kind of wide band provides effect on a relatively large area without forming very thick layer and hereby it facilitates sealed connection yet without taking much space or otherwise disturbing heat insulation effect of the heat insulation layer which is intended to serve as the main component for this purpose. The thickness is preferably 3 mm - 15 mm and the width is preferably 30-200 mm. The accurate values depend on the thickness of the walls of the smoke shaft section 1. The elongated member being a flexible band facilitates fabrication of the smoke shaft section 1 and/or the shaft 100. This kind of member is easy to install by attaching it in solid form and thereby control the shape thereof, and thereby to ensure sufficient coverage thereof.

Generally preferably, as illustrated in Figures said sealing member 34a,34b covers more than half, preferably more than 80 %, most preferably completely the length of the side face 33a,33b on which it is provided. Thus, it can seal a major portion of the length of the gap to be sealed.

Generally, the gap g1;g2 is preferably horizontally or vertically oriented. Thus, the overall solution is simple and logic to manage, in particular when designing wall structure, which can be simple by having a rectangular shape.

Each said wall 3a,3b,3c,3d having a sandwich structure is preferably such that the upper end of the wall is provided with a first form locking shape and the lower end of the wall with a second form locking shape the first and second being counterparts for each other. Figure 4 illustrates a cross section of the upper end of a wall 3a,3b,3c,3d as well as a cross section of the lower end of a wall 3a,3b,3c,3d. In this Figure the upper and lower ends are of different smoke shaft sections 1, but these smoke shaft sections 1 are similar, so they have similar lower and upper ends.

The form locking shapes provide a tight structure between piled smoke shaft sections 1 as well as accurate and firm positioning of them relative to each other. The structure is also relatively rigid. Also, the piling steps are quick and easy to perform.

In the illustrated embodiment, the first form locking shape of the upper end of the wall comprises a male form locking shape and the second form locking shape of the lower end of the wall comprises a female form locking shape forming a counterpart for the male form locking member. This could alternatively be vice versa.

The structure is more specifically such that the lower edge 41 of the first sheet 31 has been bent to form a downwardly open groove 42, particularly the first sheet 31 being bent inwards, upwards, inwards and downwards (inwards meaning towards the wall central plane), and the upper edge 43 of the first sheet 31 is arranged to fit into the groove 42, preferably bent inwards, upwards inwards and downwards.

The lower edge 51 of the second sheet 32 has been bent to form a downwardly open groove 52, particularly the second sheet 32 being bent inwards, upwards, inwards and downwards (inwards meaning towards the wall central plane), and the upper edge 53 of the second sheet 32 is arranged to fit into the groove 52, preferably bent inwards, upwards inwards and downwards.

The edges 41,43 and 51,53 shaped as described provides the aforementioned advantages of shape locking efficiently, and in such a manner that the face sheets 31,32 are able to carry vertical loads. Also, the consecutive smoke shaft sections 1 piled on top of each other are thus easy to lock vertically immovably together by aid of an elongated fixing member 60, such as bolt or screw or rivet extending through the lower edge 51 of the second sheet 32 of a first smoke shaft section 1 and the upper edge 53 of the second sheet 32 of a second smoke shaft section 1 located below said first smoke shaft section 1. Thus, the fixing need not extend deep into the wall structure whereby it does not constitute a harmful heat bridge.

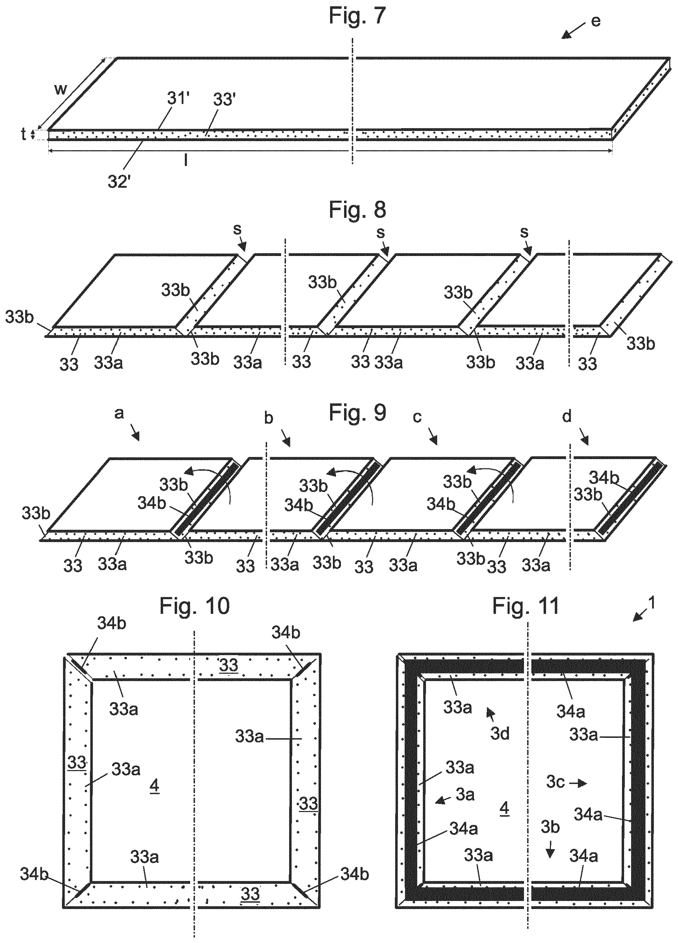

Generally, the tubular smoke shaft section 1 is such that it has four of said walls 3a-3d which are at right angle relative to each other such that the tubular smoke shaft section 1 is a rectangular tube. The second face sheets 32 of all the walls 3a-3d can be of same one-piece structure. Thus, tightness of the overall structure is improved and the fabrication method is also simplified. A preferred fabrication method is illustrated in Figures 7-11, which Figures also illustrate preferred details of the structure clearly since they show the structure in exploded kind of manner.

The dimensions of the tubular smoke shaft section 1 can be freely chosen. However, the dimensions are preferably such that x is at most 1250 mm and y is at most 1000 mm, where x is horizontal width of the smoke guiding channel 4 and y is horizontal depth of the smoke guiding channel 4. Thickness of each said insulation layer is preferably more than 50 mm, preferably more than 80 mm. Preferably, the insulation layer 33 of each wall 3a-3d fills more than 80 % of the space between the face sheets 31,32 of the wall.

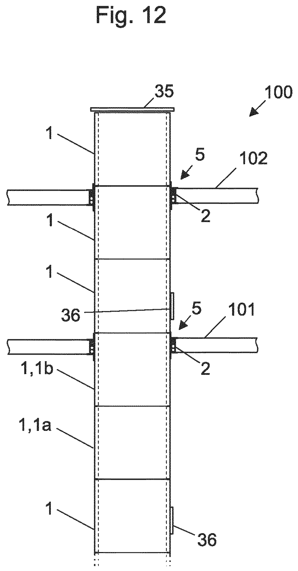

Figure 12 illustrates an arrangement comprising an embodiment of a smoke shaft 100 wherein the smoke shaft comprises plurality of tubular smoke shaft sections 1 as described referring to Figures 1-11 and piled on top of each other in alignment such that their smoke guiding channels 4 together form a continuous vertically oriented smoke guiding channel. One or more of the smoke shaft sections 1, except at least the lowermost, rests at least partially carried by the smoke shaft section 1 below it.

In the arrangement, the smoke shaft 100 extends through an opening 2 formed in a floor structure 101 and an opening 2 formed in a roof structure 102. Thereby it extends through the fire compartment that is between said structures 101 and 102. Generally, the smoke shaft can extend through any number of structures 101 and/or 102, whereby it could extend through one or more fire compartments. The smoke shaft 100 could for example extend through openings 2 formed in more than one floors 101. An insulation arrangement 5 is provided around the smoke shaft 100 at the point of each opening 2. The upper end of the smoke shaft 100 is at least partially outside of the building wherein the smoke shaft is installed. The upper end thereof is preferably provided with an openable hatch 35 covering in an openable manner an opening leading to the smoke guiding channel 4 of the smoke shaft 100.

One or more smoke shaft sections 1 of the smoke shaft 100 preferably comprises one or more smoke inlets 36 leading into the smoke channel 4 of the smoke shaft section 1 in question, as illustrated in Figure 12. The smoke inlets 36 preferably comprise an openable hatch covering them.

As illustrated in Figures 3 and 4, the smoke shaft 100 preferably comprises at least a first smoke shaft section 1 and second smoke shaft section 1 on top of the first smoke shaft section 1 section such that the upper faces 33a of the insulation layers 33 of the walls of the first section and the lower faces 33a' of the insulation layers 33 of the walls of the second section are opposite each other and have a sealing member 34a vertically between them, wherein the sealing member 34a,34b comprises intumescent material. The first smoke shaft section is marked in Figure 3 with additional reference 1a and the second with reference 1b.

Figures 7-11 illustrate a preferred embodiment of a method of fabricating a tubular smoke shaft section 1, which tubular smoke shaft section is as defined anywhere above referring to Figures 1-6 and 12.

The method comprises providing a sandwich element e having a width w and length l and thickness t, which comprises first element face sheet 31' and a second element face sheet 32' and an element insulation layer 33' between said face sheets 31',32'. This step has been illustrated in Figure 7. The element e is preferably elongated. Features 31',32',33' are still at this point parts of the element e, whereby they have been referred to by prefix "element". Element e in particular here is a blank from which walls 3a-3d are formed.

After said providing, the method comprises cutting plurality of grooves s, preferably three grooves, in the first element face sheet 31' and in the element insulation layer 33, which grooves s are elongated and oriented in width direction w of the sandwich element e and spaced apart in length I direction of the sandwich element e, the grooves s not extending in the second face sheet 32', thereby forming side faces 33b. This step has been illustrated in Figure 8.

After said cutting, the method comprises bending the sandwich element e into tubular shape, comprising bending towards each other portions a,b;b,c;c,d of the sandwich element e which portions are at the opposite sides of the grooves s. This step has been illustrated in Figure 9. The bending has been illustrated by arrows.

The method comprises placing one or more sealing members 34a,34b on one or more side faces 33a,33b of the insulation layer 33 of one or more of said portions a-b, said side faces 33a,33b of one or more of said portions a-b including one or more side faces 33b formed by said cutting and/or one or more faces 33a facing in longitudinal direction of the grooves s. The sealing member 34a,34b comprises intumescent material. The preferred further details of the sealing member 34a,34b are described referring to Figures 1-6.

Said placing can be done before said bending or after said bending depending on situation. The placing of one or more sealing members 34b on side faces 33b of said portions formed by said cutting side faces 33b is preferably performed before said bending. The placing of one or more sealing members 34a on side faces 33a of said portions facing in longitudinal direction of the grooves s is preferably performed after said bending.

The placing comprises attaching the one or more sealing members 34a,34b on one or more side faces 33a,33b of the insulation layer 33 of one or more of said portions a-b. This attaching is preferable performed directly to the side face 33a,33b of the insulation layer 33, preferably by glue.

The grooves are preferably V-shaped, which facilitates said bending and formation of a mitre joint between adjacent portions a-d. Said portions a-d will form the walls 3a-3d of the smoke shaft section.

The width w of the grooves s, as measured in said length direction of the sandwich element e, is preferably 1.5-2.5 times the thickness of the sandwich element e, preferably 1.9-2.1 times the thickness of the sandwich element e, which facilitates said bending and formation of a mitre joint between adjacent portions a-d.

As mentioned simultaneous presence of both vertical and horizontal sealing member 34a,34b provides a smoke shaft solution which has overall its structure good tightness and heat isolation without heat leaks or leaks of gaseous substances even in high temperatures. However, it is not necessary that they are simultaneously present since tightness and heat isolation of only one of a vertically extending gap or a horizontally extending gap could be sealed as defined and the other could be sealed in some other alternative way. Also, even though all walls of the smoke shaft section are provided preferably with a vertical and horizontal sealing member 34a,34b, it is not necessary since some of the walls could have some other kind of solution for facilitating tightness and heat isolation.

Generally, the smoke shaft is for guiding smoke and/or other gaseous substances such as ventilation air in case of fire. It is primarily for this use, and not for serving as a chimney of a fireplace, whereby it is preferably not connected to a fire place.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A tubular smoke shaft section (1) comprising four vertical walls (3a,3b,3c,3d) in connection with each other and arranged to border a hollow upwards and downwards open smoke guiding channel (4), wherein each said wall (3a,3b,3c,3d) has a sandwich structure and comprises a first face sheet (31) forming an inner face of the wall (3a,3b,3c,3d) and a second face sheet (32) forming an outer face of the wall (3a,3b,3c,3d), and an insulation layer (33) between said first face sheet (31) and said second face sheet (32), wherein the insulation layer (33) is a mineral wool layer, in particular which comprises or is made of mineral wool, and wherein the walls (3a,3b,3c,3d) are at right angle relative to each other such that the tubular smoke shaft section (1) is a rectangular tube, **characterized in that** one or more of said walls (3a,3b,3c,3d) comprises on one or more side faces (33a,33b) of the insulation layer (33) a sealing member (34a,34b) for sealing a gap (g1;g2) between said side face (33a,33b) of the insulation layer (33) and a side face (33a',33b) of another wall (3a,3b,3c,3d), wherein the sealing member (34a,34b) comprises intumescent material, wherein said sealing member (34a,34b) is an elongated flexible band attached directly to the side face (33a,33b) of the insulation layer (33) by glue, wherein said one or more side faces of the insulation layer on which a sealing member (34a) is provided comprises an upper or lower side face (33a;33a') of the insulation layer (33), said another wall being a wall of another tubular smoke shaft section (1) which another wall is above or below the wall comprising the side face (33a;33a') in question.

2. A tubular smoke shaft section (1) according to any of the preceding claims, wherein said sealing member (34a,34b) is an elongated flexible band having a thickness, width and length, the width/thickness ratio being more than 2.

3. A tubular smoke shaft section (1) according to any of the preceding claims, wherein said one or more side faces (33a,33b) of the insulation layer (33) on which a sealing member (34a,34b) is provided extends in direction orthogonal to normal of the face sheets (31,32) of the wall in question.

4. A tubular smoke shaft section (1) according to any of the preceding claims, wherein said upper or lower side face side face (33a) extends in horizontal direction.

5. A tubular smoke shaft section (1) according to any of the preceding claims, wherein said sealing member (34a) provided on the upper or lower side face (33a;33a') is elongated in horizontal direction.

6. A tubular smoke shaft section (1) according to any of the preceding claims, wherein said one or more side faces (33a,33b) of the insulation layer (33) on which a sealing member (34b) is provided comprises a side face (33b) of the insulation layer (33), in particular a flank face, which extends in vertical direction, said another wall being in particular an adjacent wall of the same tubular smoke shaft section (1).

7. A tubular smoke shaft section (1) according to any of the preceding claims, wherein a sealing member (34b) is between one or more mitre joints (M) of the smoke shaft section (1), wherein the mitre joint (M) is formed between insulation layers (33) of adjacent walls (3d,3a; 3a,3b;3b;3c;3c,3d).

8. A tubular smoke shaft section (1) according to any of the preceding claims, wherein the upper end of the wall (3a,3b,3c,3d) is provided with a first form locking shape and the lower end of the wall with a second form locking shape, the first and second form locking shapes being counterparts for each other.

9. A tubular smoke shaft section (1) according to any of the preceding claims, wherein the lower edge (41) of the first sheet (31) has been bent to form a downwardly open groove (42), and the upper edge (43) of the first sheet (32) is arranged to fit into the groove (42) and/or the lower edge (51) of the second sheet (32) has been bent to form a downwardly open groove (52), and the upper edge (53) of the second sheet (32) is arranged to fit into the groove (52).

10. A smoke shaft (100) wherein the smoke shaft (100) comprises plurality of tubular smoke shaft sections (1) as defined in any of the preceding claims, piled on top of each other in alignment such that their smoke guiding channels (4) together form a continuous vertically oriented smoke guiding channel.

11. A smoke shaft (100) according to any of the preceding claims, wherein the smoke shaft (100) comprises at least a first smoke shaft section (1,1a) and second smoke shaft section (1,1b) on top of the first smoke shaft section (1) section such that the upper faces (33a) of the insulation layers 33 of the walls of the first section and the lower faces (33a') of the insulation layers (33) of the walls of the second section are opposite each other and have a sealing member (34a) vertically between them, wherein the sealing member (34a,34b) comprises intumescent material.

12. Method of fabricating a tubular smoke shaft section (1), which tubular smoke shaft section (1) is as defined in any of the preceding claims, the method comprising
providing a sandwich element (e) having a width (w) and length (l) and thickness (t), which comprises a first element face sheet (31') and a second element face sheet (32') and an element insulation layer (33') between said element face sheets (31',32'); and
cutting three grooves (s) in the first element face sheet (31') and in the element insulation layer (33'), which grooves (s) are elongated and oriented in width direction (w) of the sandwich element (e) and spaced apart in length (l) direction of the sandwich element (e), the grooves (s) not extending in the second element face sheet (32'), thereby forming side faces (33b); and
bending the sandwich element (e) into tubular shape comprising bending towards each other the portions (a,b;b,c;c,d) of the sandwich element (e) which portions are at the opposite sides of the grooves (s); wherein the method comprises placing one or more sealing members (34a,34b) on one or more side faces (33a,33b) of the insulation layer (33) of one or more of said portions (a-b), wherein the sealing member (34a,34b) comprises intumescent material, wherein said sealing member (34a,34b) is an elongated flexible band, and said placing comprises attaching the one or more sealing members (34a,34b) directly to one or more side faces (33a,33b) of the insulation layer by glue, which said side faces (33a,33b) include one or more faces (33a) facing in longitudinal direction of the grooves (s).

## Patentansprüche

1. Rohrförmiger Rauchschachtabschnitt (1) aufweisend vier miteinander verbundene vertikale Wände (3a, 3b, 3c, 3d), welche dafür eingerichtet sind, einen nach oben und nach unten offenen hohlen Rauchführungskanal (4) zu begrenzen, wobei jede der Wände (3a, 3b, 3c, 3d) eine mehrschichtige Struktur aufweist, und eine erste Deckschicht (31), welche eine Innenfläche der Wand (3a, 3b, 3c, 3d) bildet, eine zweite Deckschicht (32), welche eine Außenfläche der Wand (3a, 3b, 3c, 3d) bildet, und eine Isolationsschicht (33) zwischen der ersten Deckschicht (31) und der zweiten Deckschicht (32) aufweist, wobei die Isolationsschicht (33) insbesondere eine Mineralwollschicht ist, welche Mineralwolle aufweist oder aus dieser gebildet ist, und wobei die Wände (3a, 3b, 3c, 3d) einen rechten Winkel zueinander aufweisen, sodass der rohrförmige Rauchschachtabschnitt (1) ein rechteckiges Rohr ist, **dadurch gekennzeichnet, dass** eine oder mehrere der Wände (3a, 3b, 3c, 3d) an einer oder mehreren Seitenflächen (33a, 33b) der Isolationsschicht (33) ein Dichtungselement (34a, 34b) zum Abdichten eines Spalts (g1; g2) zwischen der Seitenfläche (33a, 33b) der Isolationsschicht (33) und einer Seitenfläche (33a', 33b) einer weiteren Wand (3a, 3b, 3c, 3d) aufweist, wobei das Dichtungselement (34a, 34b) aufschäumendes Material aufweist, wobei das Dichtungselement (34a, 34b) ein längserstrecktes flexibles Band ist, welches mittels Klebstoff direkt an der Seitenfläche (33a, 33b) der Isolationsschicht (33) angebracht ist, wobei die eine oder die mehreren Seitenflächen der Isolationsschicht, an welchen ein Dichtungselement (34a) bereitgestellt ist, eine obere oder eine untere Seitenfläche (33a; 33a') der Isolationsschicht (33) aufweist/aufweisen, wobei die weitere Wand eine Wand eines weiteren rohrförmigen Rauchschachtabschnitts (1) ist, welche über oder unter der Wand, welche die betreffende Seitenfläche (33a; 33a') aufweist, angeordnet ist.

2. Rohrförmiger Rauchschachtabschnitt (1) nach einem der vorstehenden Ansprüche, wobei das Dichtungselement (34a, 34b) ein längserstrecktes flexibles Band ist, welches eine Dicke, eine Breite und eine Länge aufweist, wobei das Breiten/Dickenverhältnis mehr als 2 beträgt.

3. Rohrförmiger Rauchschachtabschnitt (1) nach einem der vorstehenden Ansprüche, wobei sich die eine oder die mehreren Seitenflächen (33a, 33b) der Isolationsschicht (33), an welchen ein Dichtungselement (34a, 34b) bereitgestellt ist, in einer Richtung orthogonal zu den Deckflächen (31, 32) der betreffenden Wand erstreckt/erstrecken.

4. Rohrförmiger Rauchschachtabschnitt (1) nach einem der vorstehenden Ansprüche, wobei sich die obere oder die untere Seitenfläche (33a) in horizontaler Richtung erstreckt.

5. Rohrförmiger Rauchschachtabschnitt (1) nach einem der vorstehenden Ansprüche, wobei sich das Dichtungselement (34a), welches an der oberen oder der unteren Seitenfläche (33a; 33a) bereitgestellt ist, der Länge nach in horizontaler Richtung erstreckt.

6. Rohrförmiger Rauchschachtabschnitt (1) nach einem der vorstehenden Ansprüche, wobei die eine oder die mehreren Seitenflächen (33a, 33b) der Isolationsschicht (33), an welchen ein Dichtungselement (34b) bereitgestellt ist, eine Seitenfläche (33b) der Isolationsschicht (33), insbesondere eine Flankenfläche, aufweist/aufweisen, welche sich in vertikaler Richtung erstreckt, wobei die weitere Wand insbesondere eine angrenzende Wand desselben rohrförmigen Rauchschachtabschnitts (1) ist.

7. Rohrförmiger Rauchschachtabschnitt (1) nach einem der vorstehenden Ansprüche, wobei ein Dichtungselement (34b) zwischen einer oder mehreren Gehrungsfugen (M) des Rauchschachtabschnitts (1) angeordnet ist, wobei die Gehrungsfuge (M) zwischen den Isolationsschichten (33) angrenzender Wände (3d, 3a; 3a, 3b; 3b; 3c; 3c, 3d) gebildet ist.

8. Rohrförmiger Rauchschachtabschnitt (1) nach einem der vorstehenden Ansprüche, wobei das obere Ende der Wand (3a, 3b, 3c, 3d) eine erste formschlüssige Gestaltung aufweist, und das untere Ende der Wand eine zweite formschlüssige Gestaltung aufweist, wobei die erste und die zweite formschlüssige Gestaltung Gegenstücke zueinander sind.

9. Rohrförmiger Rauchschachtabschnitt (1) nach einem der vorstehenden Ansprüche, wobei die untere Kante (41) der ersten Schicht (31) derart gebogen ist, dass sie eine nach unten offene Nut (42) bildet, und die obere Kante (43) der ersten Schicht (32) derart gestaltet ist, dass sie in die Nut (42) passt, und/oder die untere Kante (51) der zweiten Schicht (32) derart gebogen ist, dass sie eine nach unten offene Nut (52) bildet, und die obere Kante (53) der zweiten Schicht (32) derart gestaltet ist, dass sie in die Nut (52) passt.

10. Rauchschacht (100), wobei der Rauchschacht (100) eine Mehrzahl rohrförmiger Rauchschachtabschnitte (1) gemäß der Definition in einem der vorstehenden Ansprüche aufweist, welche in einer derartigen Ausrichtung übereinandergestapelt sind, dass ihre Rauchführungskanäle (4) zusammen einen durchgehenden, vertikal ausgerichteten Rauchführungskanal bilden.

11. Rauchschacht (100) nach einem der vorstehenden Ansprüche, wobei der Rauchschacht (100) mindestens einen ersten Rauchschachtabschnitt (1, 1a) und einen zweiten Rauchschachtabschnitt (1, 1b) über dem ersten Rauchschachtabschnitt (1) aufweist, sodass die oberen Flächen (33a) der Isolationsschichten (33) der Wände des ersten Abschnitts und die unteren Flächen (33a') der Isolationsschichten (33) der Wände des zweiten Abschnitts einander entgegengesetzt sind, und ein Dichtungselement (34a) vertikal zwischen ihnen angeordnet ist, wobei das Dichtungselement (34a, 34b) aufschäumendes Material aufweist.

12. Verfahren zum Herstellen eines rohrförmigen Rauchschachtabschnitts (1), welcher ein rohrförmiger Rauchschachtabschnitt (1) gemäß der Definition in einem der vorstehenden Ansprüche ist, das Verfahren umfassend
Bereitstellen eines mehrschichtigen Elements (e) aufweisend eine Breite (w), eine Länge (l) und eine Dicke (t), welches eine erste Elementdeckschicht (31') und eine zweite Elementdeckschicht (32') und eine Elementisolationsschicht (33') zwischen diesen Elementdeckschichten (31', 32') aufweist; und
Schneiden von drei Nuten (s) in die erste Elementdeckschicht (31') und in Elementisolationsschicht (33), wobei die Nuten (s) längserstreckt sind und in der Breitenrichtung (w) des mehrschichtigen Elements (e) ausgerichtet, und in Richtung der Länge (l) des mehrschichtigen Elements (e) beabstandet sind, wobei sich die Nuten (s) nicht in die zweite Elementdeckschicht (32') erstrecken, wodurch sie Seitenflächen (33b) bilden; und
Biegen des mehrschichtigen Elements (e) in eine rohrförmige Gestalt, umfassend das Biegen der Abschnitte (a, b; b, c; c, d) des mehrschichtigen Elements (e) zueinander hin, wobei diese Abschnitte an den entgegengesetzten Seiten der Nuten (s) angeordnet sind; wobei das Verfahren das Anordnen eines oder mehrerer Dichtungselemente (34a, 34b) an einer oder mehreren Seitenflächen (33a, 33b) der Isolationsschicht (33) eines oder mehrerer der Abschnitte (a - b) umfasst, wobei das Dichtungselement (34a, 34b) aufschäumendes Material aufweist, wobei das Dichtungselement (34a, 34b) ein längserstrecktes flexibles Band ist, und das Anordnen das Anbringen des einen oder der mehreren Dichtungselemente (34a, 34b) mittels Klebstoff direkt an einer oder mehreren Seitenflächen (33a, 33b) der Isolationsschicht umfasst, wobei die Seitenflächen (33a, 33b) eine oder mehrere Flächen (33a) aufweisen, welche in der Längsrichtung der Nuten (s) ausgerichtet sind.

## Revendications

1. Section de conduit de fumée tubulaire (1) comprenant quatre parois verticales (3a, 3b, 3c, 3d) connectées entre elles et agencées de manière à délimiter un canal de guidage de fumée (4) creux, ouvert vers le haut et vers le bas, dans laquelle chacune desdites parois (3a, 3b, 3c, 3d) présente une structure en sandwich et comprend une première feuille de face (31) formant une face interne de la paroi (3a, 3b, 3c, 3d) et une deuxième feuille de face (32) formant une face externe de la paroi (3a, 3b, 3c, 3d), et une couche d'isolation (33) entre ladite première feuille de face (31) et ladite deuxième feuille de face (32), dans laquelle la couche d'isolation (33) est une couche de laine minérale, en particulier une couche qui comprend de la laine minérale ou est constituée de laine minérale, et dans laquelle les parois (3a, 3b, 3c, 3d) sont à angle droit l'une par rapport à l'autre de telle sorte que la section de conduit de fumée tubulaire (1) est un tube rectangulaire, **caractérisée en ce qu'**une ou plusieurs desdites parois (3a, 3b, 3c, 3d) comprennent, sur une ou plusieurs faces latérales (33a, 33b) de la couche d'isolation (33), un élément d'étanchéité (34a, 34b) pour sceller un intervalle (g1 ; g2) entre ladite face latérale (33a, 33b) de la couche d'isolation (33) et une face latérale (33a', 33b) d'une autre paroi (3a, 3b, 3c, 3d), dans laquelle l'élément d'étanchéité (34a, 34b) comprend un matériau intumescent, dans laquelle ledit élément d'étanchéité (34a, 34b) est une bande flexible allongée fixée directement à la face latérale (33a, 33b) de la couche d'isolation (33) par de la colle, dans laquelle lesdites une ou plusieurs faces latérales de la couche d'isolation sur lesquelles un élément d'étanchéité (34a) est pourvu comprennent une face latérale supérieure ou inférieure (33a ; 33a') de la couche d'isolation (33), ladite autre paroi étant une paroi d'une autre section de conduit de fumée tubulaire (1), ladite autre paroi se trouvant au-dessus ou en dessous de la paroi comprenant la face latérale (33a ; 33a') en question.

2. Section de conduit de fumée tubulaire (1) selon l'une quelconque des revendications précédentes, dans laquelle ledit élément d'étanchéité (34a, 34b) est une bande flexible allongée ayant une épaisseur, une largeur et une longueur, le rapport largeur/épaisseur étant supérieur à 2.

3. Section de conduit de fumée tubulaire (1) selon l'une quelconque des revendications précédentes, dans laquelle lesdites une ou plusieurs faces latérales (33a, 33b) de la couche d'isolation (33) sur lesquelles un élément d'étanchéité (34a, 34b) est pourvu s'étendent dans une direction orthogonale à la normale des feuilles de face (31, 32) de la paroi en question.

4. Section de conduit de fumée tubulaire (1) selon l'une quelconque des revendications précédentes, dans laquelle ladite face latérale supérieure ou inférieure (33a) s'étend en direction horizontale.

5. Section de conduit de fumée tubulaire (1) selon l'une quelconque des revendications précédentes, dans laquelle ledit élément d'étanchéité (34a) pourvu sur la face latérale supérieure ou inférieure (33a ; 33a') est allongé en direction horizontale.

6. Section de conduit de fumée tubulaire (1) selon l'une quelconque des revendications précédentes, dans laquelle lesdites une ou plusieurs faces latérales (33a, 33b) de la couche d'isolation (33) sur lesquelles un élément d'étanchéité (34b) est pourvu comprennent une face latérale (33b) de la couche d'isolation (33), en particulier une face de flanc, qui s'étend en direction verticale, ladite autre paroi étant en particulier une paroi adjacente de la même section de conduit de fumée tubulaire (1).

7. Section de conduit de fumée tubulaire (1) selon l'une quelconque des revendications précédentes, dans laquelle un élément d'étanchéité (34b) se trouve entre un ou plusieurs joints à onglet (M) de la section de conduit de fumée (1), dans laquelle le joint à onglet (M) est formé entre les couches d'isolation (33) de parois adjacentes (3d, 3a ; 3a, 3b ; 3b ; 3c ; 3c, 3d).

8. Section de conduit de fumée tubulaire (1) selon l'une quelconque des revendications précédentes, dans laquelle l'extrémité supérieure de la paroi (3a, 3b, 3c, 3d) est pourvue d'une première forme de verrouillage de forme et l'extrémité inférieure de la paroi d'une deuxième forme de verrouillage de forme, les première et deuxième formes de verrouillage de forme se correspondant mutuellement.

9. Section de conduit de fumée tubulaire (1) selon l'une quelconque des revendications précédentes, dans laquelle le bord inférieur (41) de la première feuille (31) a été courbé pour former une rainure ouverte vers le bas (42), et le bord supérieur (43) de la première feuille (32) est agencé pour s'insérer dans la rainure (42) et/ou le bord inférieur (51) de la deuxième feuille (32) a été courbé pour former une rainure ouverte vers le bas (52), et le bord supérieur (53) de la deuxième feuille (32) est agencé pour s'insérer dans la rainure (52).

10. Conduit de fumée (100), dans lequel le conduit de fumée (100) comprend une pluralité de sections de conduit de fumée tubulaires (1) telles que définies dans l'une quelconque des revendications précédentes, empilées en alignement les unes sur les autres de telle sorte que leurs canaux de guidage de fumée (4) forment conjointement un canal de guidage de fumée continu orienté verticalement.

11. Conduit de fumée (100) selon l'une quelconque des revendications précédentes, dans lequel le conduit de fumée (100) comprend au moins une première section de conduit de fumée (1, 1a) et une deuxième section de conduit de fumée (1, 1b) au-dessus de la première section de conduit de fumée (1) de telle sorte que les faces supérieures (33a) des couches d'isolation (33) des parois de la première section et les faces inférieures (33a') des couches d'isolation (33) des parois de la deuxième section sont opposées les unes aux autres et comportent verticalement entre elles un élément d'étanchéité (34a), dans lequel l'élément d'étanchéité (34a, 34b) comprend un matériau intumescent.

12. Procédé de fabrication d'une section de conduit de fumée tubulaire (1), ladite section de conduit de fumée tubulaire (1) étant telle que définie dans l'une quelconque des revendications précédentes, le procédé comprenant
la fourniture d'un élément sandwich (e) présentant une largeur (w), une longueur (1) et une épaisseur (t), qui comprend une première feuille de face d'élément (31') et une deuxième feuille de face d'élément (32'), ainsi qu'une couche d'isolation d'élément (33') entre lesdites feuilles de face d'élément (31', 32') ; et
la découpe de trois rainures (s) dans la première feuille de face de l'élément (31') et dans la couche d'isolation d'élément (33'), lesdites rainures (s) étant allongées et orientées en direction de la largeur (w) de l'élément sandwich (e) et espacées en direction de la longueur (1) de l'élément sandwich (e), les rainures (s) ne s'étendant pas dans la deuxième feuille de face de l'élément (32'), formant ainsi des faces latérales (33b) ; et
la courbure de l'élément sandwich (e) selon une forme tubulaire comprenant la courbure l'une vers l'autre des portions (a, b ; b, c ; c, d) de l'élément sandwich (e), lesdites portions étant sur les côtés opposés des rainures (s) ; dans laquelle le procédé comprend le placement d'un ou plusieurs éléments d'étanchéité (34a, 34b) sur une ou plusieurs faces latérales (33a, 33b) de la couche d'isolation (33) d'une ou plusieurs desdites portions (a-b), dans lequel l'élément d'étanchéité (34a, 34b) comprend un matériau intumescent, dans lequel ledit élément d'étanchéité (34a, 34b) est une bande flexible allongée, et ledit placement comprend la fixation desdits un ou plusieurs éléments d'étanchéité (34a, 34b) directement sur une ou plusieurs faces latérales (33a, 33b) de la couche d'isolation par de la colle, lesdites faces latérales (33a, 33b) incluant une ou plusieurs faces (33a) orientées en direction longitudinale des rainures (s).
